# EUROPEAN PATENT APPLICATION

(11) **EP 3 258 428 A1**
(43) Date of publication of application: **20.12.2017**
(21) Application number: 16175000.5
(22) Date of filing: 17.06.2016
(51) Int. Cl.: G06Q 10/06, G06Q 10/10, G06Q 10/08

(54) **FLEET MANAGEMENT SYSTEM AND METHOD**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method and apparatus for performance by a fleet management system in the management of the performance of maintenance on a fleet of vehicles (104), the method comprising: providing an initial fleet plan (400) specifying vehicle availability over a time period and including, for each vehicle (104), a schedule of the maintenance operations for that vehicle (104); acquiring update information, the update information including one or more further criteria to be fulfilled by the fleet of vehicles (104) and/or further vehicle maintenance data; and updating the initial fleet plan (400), using the update information, to produce an updated fleet plan specifying updated vehicle availability over the future time period and including, for each vehicle (104), an updated schedule of maintenance operations for that vehicle (104).

## Description

### FIELD OF THE INVENTION

The present invention relates to fleet management systems and the management of fleets of vehicles.

### BACKGROUND

Typically, fleets of military aircraft have requirements placed on them from operators/owners of those fleets. For example, it may be a requirement that, during any particular time period, a certain number of aircraft must be available to fly. The requirements placed on those fleets of aircraft may be changed with short or no notice.

Scheduling the maintenance of fleets of military aircraft is a complex operation that typically involves the coordination of information providers, maintenance operations providers, and multiple parts suppliers.

Supply chain management for repair parts also tends to be a complex and costly operation. Typically, disruptions to aircraft availability is prevented or reduced by large parts inventories and/or by premature replacement of aircraft systems.

### SUMMARY OF THE INVENTION

In a first aspect, the present invention provides a method for performance by a fleet management system in the management of the performance of maintenance on a fleet of vehicles. The method comprises: providing an initial fleet plan, the initial fleet plan specifying vehicle availability over a future time period and including, for each vehicle, a schedule of the maintenance operations for that vehicle, wherein the initial fleet plan is dependent upon one or more criteria specifying vehicle availability for one or more predetermined time periods in the future time period, and the initial fleet plan is dependent upon vehicle maintenance data; acquiring update information, the update information including data selected from the group of data consisting of one or more further criteria to be fulfilled by the fleet of vehicles and further vehicle maintenance data, the one or more further criteria specifying vehicle availability for one or more predetermined time periods within the future time period, the one or more further criteria being different to the one or more criteria, the further vehicle maintenance data being different to the vehicle maintenance data; and updating the initial fleet plan, using the update information, to produce an updated fleet plan, the updated fleet plan specifying updated vehicle availability over the future time period and including, for each vehicle, an updated schedule of maintenance operations for that vehicle.

The step of providing the initial fleet plan may comprise: acquiring the one or more criteria specifying vehicle availability for one or more predetermined time periods; acquiring the vehicle maintenance data specifying multiple maintenance operations, each maintenance operation being an operation to be performed on one or more of the vehicles in the fleet; and determining, based on the one or more criteria, the initial fleet plan, the initial fleet plan including, for each vehicle, a schedule of the maintenance operations for that vehicle.

The method may further comprise: determining, using the updated fleet plan, a maintenance plan for one or more maintenance service providers, the maintenance plan comprising, for each maintenance service provider, a schedule of one or more of the maintenance operations specified in the updated schedules of maintenance operations that are to be performed by that maintenance service provider on a vehicle of the fleet; and managing the maintenance service providers to perform the maintenance operations on the fleet of vehicles in accordance with the maintenance plan.

The fleet management system may centrally manage one or more maintenance service providers and one or more equipment suppliers from a central operations centre to perform maintenance on the vehicles. The central operations centre may comprise a network of computer servers providing communication with the one or more maintenance service providers and the one or more equipment suppliers.

The method may further comprise: determining, for each maintenance service provider, an equipment list including equipment to support the maintenance operations to be performed by that maintenance service provider; and providing, to each maintenance service provider, the equipment specified in the equipment list for that maintenance service provider by managing supply of the specified equipment from one or more equipment suppliers to that maintenance service provider.

The method may further comprise storing, for each maintenance service provider, an inventory of equipment stored by that maintenance service provider and usable to support the maintenance operations to be performed by that maintenance service provider.

The vehicles may be aircraft.

The one or more criteria and/or further criteria may include at least one criterion specifying a number of flying hours that the fleet of aircraft must be available to fly within a predetermined time period.

The method may further comprise determining, based on the updated fleet plan, a projected flight profile for the fleet of aircraft over one or more of the predetermined time periods.

At least part of the vehicle maintenance data may be acquired from an integrated health monitoring system located on a vehicle in the fleet.

A management service provider may be an owner and/or operator of the fleet management system. The management of the performance of maintenance on the fleet of vehicles may be for a customer of the management service provider. The customer may be an operator and/or owner of the fleet of vehicles. The management service provider may be a separate business entity from the customer. The management service provider may charge and receive a fee from the customer for managing the performance of the maintenance of the vehicles. The one or more criteria and the one or more criteria may be specified by the customer. The method may further comprise sending, to the customer, by the fleet management system, the updated fleet plan.

The method may further comprise: determining a cost of managing the performance of the maintenance on the fleet of vehicles based on the determined updated fleet plan; and providing the determined cost to the customer. The performance of the maintenance on a fleet of vehicles may be performed responsive to receiving approval of the fleet plan and the cost from the customer.

Determining the cost may comprise negotiating, with one or more equipment suppliers, a cost for the one or more equipment suppliers to supply the specified equipment to the one or more maintenance service providers.

In a further aspect, the present invention provides a fleet management system for centrally managing the performance of maintenance on a fleet of vehicles. The fleet management system comprises one or more processors configured to: acquire an initial fleet plan, the initial fleet plan specifying vehicle availability over a future time period and including, for each vehicle, a schedule of the maintenance operations for that vehicle, wherein the initial fleet plan is dependent upon one or more criteria specifying vehicle availability for one or more predetermined time periods in the future time period, and the initial fleet plan is dependent upon vehicle maintenance data; acquire update information, the update information including data selected from the group of data consisting of one or more further criteria to be fulfilled by the fleet of vehicles and further vehicle maintenance data, the one or more further criteria specifying vehicle availability for one or more predetermined time periods within the future time period, the one or more further criteria being different to the one or more criteria, the further vehicle maintenance data being different to the vehicle maintenance data; and update the initial fleet plan, using the update information, to produce an updated fleet plan, the updated fleet plan specifying updated vehicle availability over the future time period and including, for each vehicle, an updated schedule of maintenance operations for that vehicle.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing a program or at least one of the plurality of programs according to the preceding aspect.

### BRIEF DESCRIPTION OF THE DRAWINGS

Figure 1 is a schematic illustration (not to scale) of an environment including a fleet of aircraft and a fleet management system;
Figure 2 is a schematic illustration (not to scale) showing further details of the fleet management system;
Figure 3 is a process flow chart showing certain steps of a process of managing operations and maintenance of the fleet of aircraft;
Figure 4 is a schematic illustration (not to scale) of a fleet plan determined by the fleet management system;
Figure 5 is a schematic illustration (not to scale) of a maintenance plan determined by the fleet management system; and
Figure 6 is a process flow chart showing certain steps of a process performed by an economic model module.

### DETAILED DESCRIPTION

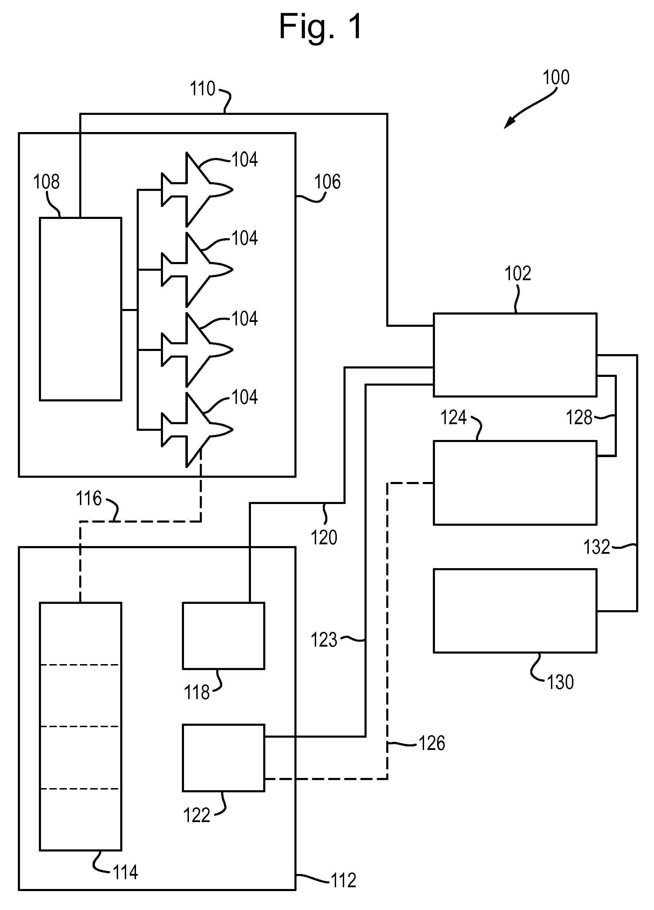

Figure 1 is a schematic illustration (not to scale) of an example environment 100 in which an embodiment of a fleet management system 102 is implemented to centrally manage operations of a fleet of aircraft 104 and the maintenance of that fleet of aircraft 104.

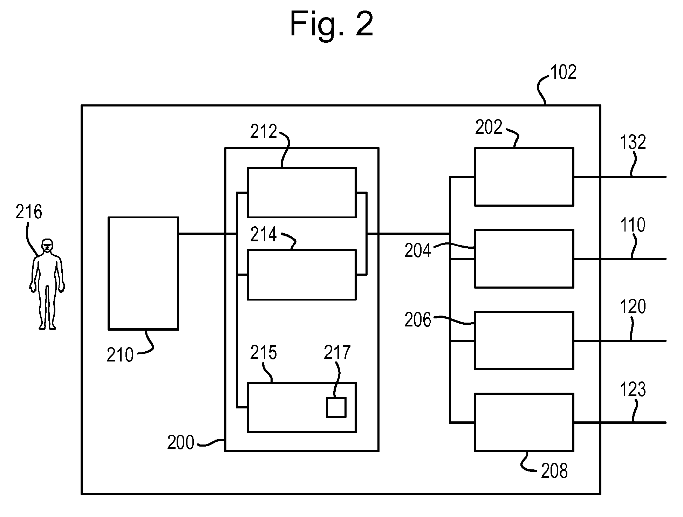

The fleet management system 102 is described in more detail later below with reference to Figure 2. In this embodiment, a management service provider is an owner and/or operator of the fleet management system 102.

The fleet of aircraft 104 is located at an operations centre 106. In this embodiment, for the purposes of illustration, there are four aircraft 104 in the fleet, the aircraft 104 being the same type of aircraft. However, in other embodiments, there is a different number of aircraft in the fleet. In some embodiments, there is more than one different type of aircraft in the fleet. In this embodiment, the aircraft 104 are manned, military aircraft.

Operators of the aircraft 104, which are collectively represented by a single box and the reference numeral 108, are also located at the operations centre 106. The aircraft operators 108 may include, but are not limited to, pilots for the aircraft 104, and ground crew for the aircraft 104.

In this embodiment, the aircraft operators 108 include trained personnel capable of performing line maintenance operations on the aircraft to support aircraft flight readiness.

The aircraft operators 108 include trained personnel capable of collecting aircraft data from the aircraft 104. For example, Health Usage and Monitoring System (HUMS) data may be collected from the aircraft 104 in, for example, an aircraft removable data storage device which is configured to communicate with a plurality of aircraft sensors, avionics subsystems, and other HUMS data collection devices on board the aircraft 104.

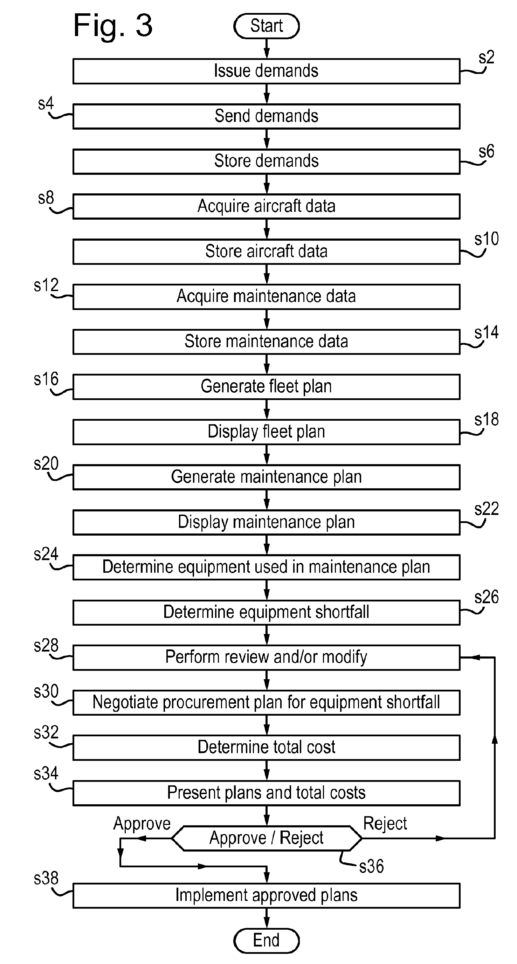

The aircraft operators 108 use one or more computers or other processing apparatus or processors to retrieve the aircraft data. These computers operated by the aircraft operators 108 are coupled to the fleet management system 102 via a first communications link 110 such that information may be sent between the aircraft operators 108 and the fleet management system 102, for example such that the collected aircraft data may be uploaded to the fleet management system 102 as described in more detail later below with reference to Figure 3. Any appropriate communications system may be used to provide the first communications link 110.

The environment 100 further comprises an aircraft maintenance facility 112. The aircraft maintenance facility 112 is a base maintenance location at which major maintenance services are provided for the aircraft 104. In this embodiment, maintenance operations, including, but not to limited, maintenance, repair, and overhaul operations, are performed on the aircraft at the aircraft maintenance facility 112.

The aircraft maintenance facility 112 includes a plurality of aircraft maintenance bays 114 in which an aircraft 104 may be stored while maintenance operations are being performed on that aircraft 104. There may be any number of maintenance bays 114. The maintenance bays 114 are coupled to the operations centre 106 via a first transport link 116 such that the aircraft 104 may be transported to the maintenance bays 114 for maintenance.

In some embodiments, the maintenance bays 114 include one or more bays that do not house an aircraft 104 and instead may be item repair bays in which, amongst other things, maintenance activities (e.g. unscheduled maintenance activities) at item level may be performed. In other words, the maintenance bays 114 may include bays for the maintenance of aircraft components, assemblies, or sub-assemblies, which may be removed from an aircraft in order for maintenance to be performed thereon.

The aircraft maintenance facility 112 includes trained maintenance personnel 118 capable of carrying out the maintenance operations on the aircraft 104 and/or item level maintenance in the maintenance bays 114.

In some embodiments, some maintenance operations are performed at the operations centre 106, e.g. by maintenance personnel 118 located at the operations centre 106 (not shown in the Figures). For example, item level maintenance operations may be performed at the operations centre 106 on an aircraft component.

In this embodiment, the maintenance personnel 118 use one or more computers or other processing apparatus or processors to generate maintenance records for the aircraft 104 which may specify maintenance operations that have been performed on the aircraft 104. These computers operated by the maintenance personnel 118 are coupled to the fleet management system 102 via a second communications link 120 such that information may be sent between the maintenance personnel 118 and the fleet management system 102, for example such that the generated maintenance records may be uploaded to the fleet management system 102 as described in more detail later below with reference to Figure 3. Any appropriate communications system may be used to provide the second communications link 120.

The aircraft maintenance facility 112 includes an equipment store 122 containing equipment for use by the maintenance personnel 118 when carrying out the maintenance operations. The equipment store 122 contains, for example, service manuals, maintenance repair records, engineering drawings, specialised tools, and repair parts for the aircraft 104. The equipment store 122 is coupled to the fleet management system 102 via a third communications link 123 such that information may be sent between the equipment store 122 and the fleet management system 102, for example such that an inventory of the equipment store 122 may be uploaded from the equipment store 122 to the fleet management system 102. Any appropriate communications system may be used to provide the third communications link 123.

The environment 100 further comprises one or more suppliers, which are collectively represented by a single box and the reference numeral 124. The suppliers 124 are providers, for example manufacturers or distributers, of some or all of the equipment used by the maintenance personnel 118 when carrying out the maintenance operations on the aircraft 104. For example, the suppliers 124 may include a manufacturer of a repair part or expendable used during maintenance or repair of an aircraft 104. The suppliers 124 are coupled to the equipment store 122 via a second transport link 126 such that equipment for use in the maintenance operations may be transported to the equipment store 122. The suppliers 124 are coupled to the fleet management system 102 via a fourth communications link 128 such that information may be sent between the fleet management system 102 and the suppliers 124, as described in more detail later below with reference to Figure 3.

The environment 100 further comprises one or more demand issuers, which are collectively represented by a single box and the reference numeral 130. As described in more detail later below with reference to Figure 3, the demand issuers 130 specify or issue one or more demands that the fleet of aircraft 104 is to fulfil. The demand issuers 130 may include the owner or owners (or operators) of the fleet of aircraft 104. The demand issuers 130 may, for example, be employers of one or more of the aircraft pilots or above mentioned trained personnel. The demand issuers 130 are coupled to the fleet management system 102 via a fifth communications link 132 such that information may be sent between the demand issuers 130 and the fleet management system 102, for example such that the demands of the demand issuers 130 may be sent to the fleet management system 102.

In this embodiment, the management service provider manages the performance of maintenance on the fleet of aircraft 104, using the fleet management system 102, for the demand issuers 130. The demand issuers 130 are customers of the management service provider. The management service provider is a separate business entity from the demand issuers 130. The management service provider charges and receives a fee from the demand issuers 130 for managing the performance of the maintenance of the aircraft 104, as described in more detail later below with reference to Figure 3.

In this embodiment, the fleet management system 102 is configured to centrally manage the operations of the operations centre 106, the maintenance facility 112, and the suppliers 124 to best meet the demands of the owners 130.

Figure 2 is a schematic illustration (not to scale) showing further details of the fleet management system 102.

In this embodiment, the fleet management system 102 comprises a processor 200, a demands database 202, an aircraft data database 204, a maintenance data database 206, an inventory database 208, and a user interface 210.

The processor 200 comprises a fleet plan generation module 212, a maintenance plan generation module 214, and an economic model module 215.

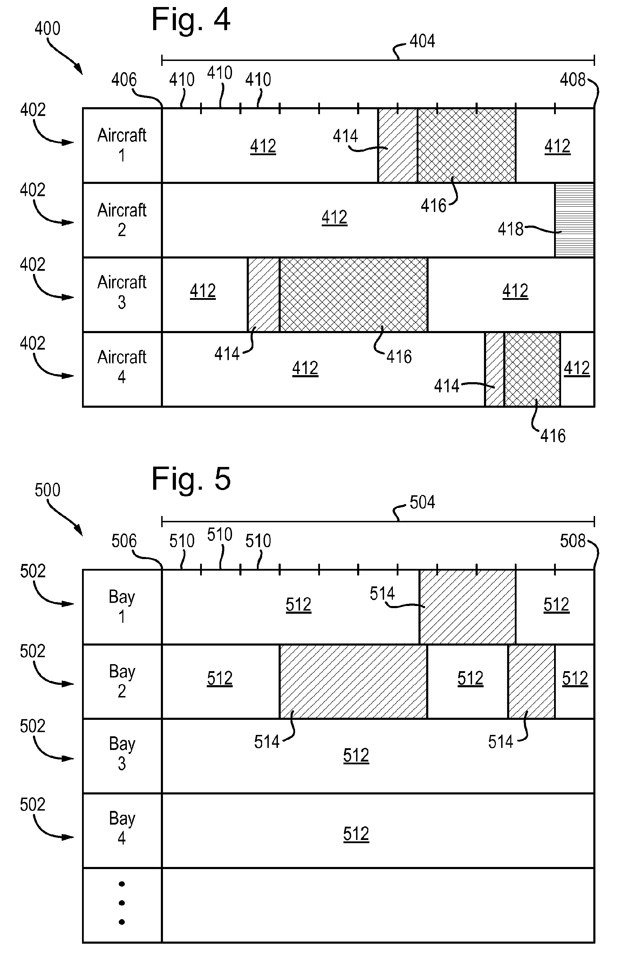

In this embodiment, the fleet plan generation module 212 is implemented through computer readable software in conjunction with at least part of the processor 200 configured to execute that software. The fleet plan generation module 212 is coupled to each of the databases 202-208 such that information may be sent between the fleet plan generation module 212 and each of the databases 202-208. As described in more detail later below with reference to Figure 3, the fleet plan generation module 212 is configured to process data acquired from one or more of the databases 202-208 to generate a "fleet plan" for the fleet of aircraft 104. The fleet plan will be described in more detail later below with reference to Figure 4. The fleet plan generation module 212 is further coupled to the user interface 210 such that that information may be sent between the fleet plan generation module 212 and the user interface 210.

In this embodiment, the maintenance plan generation module 214 is implemented through computer readable software in conjunction with at least part of the processor 200 configured to execute that software. The maintenance plan generation module 214 is coupled to each of the databases 202-208 such that information may be sent between the maintenance plan generation module 214 and each of the databases 202-208. As described in more detail later below with reference to Figure 3, the maintenance plan generation module 214 is configured to process data acquired from one or more of the databases 202-208 to generate a "maintenance plan" for the fleet of aircraft 104. The maintenance plan will be described in more detail later below with reference to Figure 5. The maintenance plan generation module 214 is further coupled to the user interface 210 such that that information may be sent between the maintenance plan generation module 214 and the user interface 210.

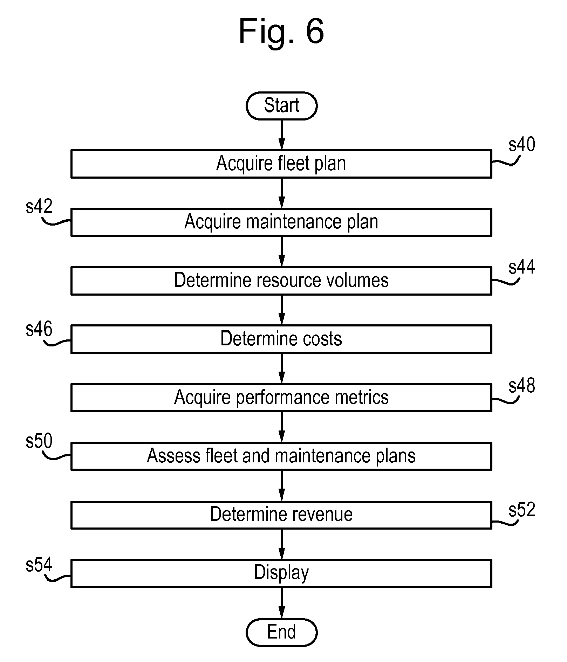

In this embodiment, the economic model module 215 is implemented through computer readable software in conjunction with at least part of the processor 200 configured to execute that software. The economic model module 215 is coupled to the fleet plan generation module 212 and the maintenance plan generation module 214 such the fleet plan and maintenance plan may be acquired by the economic model module 215. As described in more detail later below with reference to Figure 6, the economic model module 215 is configured to process data acquired by the economic model module 215 using a predefined economic model 217 to determine an expected revenue for the management services provider for implementing the determined fleet and maintenance plans. The economic model module 215 is further configured to process data acquired by the economic model module 215 to generate a high-level fleet plan and a high-level maintenance plan. This advantageously tends to allow the economic model module 215 to perform rapid, self-contained analysis (e.g. scenario, "what if" analyses, etc.)

The economic model 217 may be a digital model specifying relationships between various variables that may be used to calculate the expected revenue. The economic model module 215 and the economic model 217 will be described in more detail later below with reference to Figure 6. The economic model module 215 is further coupled to the user interface 210 such that that information may be sent between the economic model module 215 and the user interface 210.

The demands database 202 is a database coupled to the demand issuers 130 via the fifth communications link 132. The demands database 202 is configured to receive and store demands issued by the demand issuers 30.

The aircraft data database 204 is a database coupled to the computers operated by the aircraft operators 108 via the first communications link 110. The aircraft data database 204 is configured to receive and store aircraft data uploaded to the fleet management system 102 by the aircraft operators 108.

The maintenance data database 206 is a database coupled to the computers operated by the maintenance personnel 118 via the second communications link 120. The maintenance data database 206 is configured to receive and store maintenance records and other maintenance data uploaded to the fleet management system 102 by the maintenance personnel 118.

The inventory database 208 is a database coupled to the equipment store 122 via the third communications link 123. The inventory database 208 is configured to receive and store an inventory of the contents of the equipment store 122 uploaded to the fleet management system 102 by the equipment store 122.

The user interface 210 may be any appropriate user interface using which a user 216 of the fleet management system 102 may provide an input to the plan generation modules 212, 214. The user interface 210 is further configured to display, for use by the user 216, information sent to the user interface 210 by the plan generation modules 212, 214.

Apparatus, including the processor 200, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 3 is a process flow chart showing certain steps of a process in which the fleet management system 102 centrally manages operations of a fleet of aircraft 104 and the maintenance of the fleet of aircraft 104.

At step s2, the demand issuers 130 issue one or more demands that they want the fleet of aircraft 104 to fulfil. Demands issued by the demand issuers 130 may specify one or more criteria to be fulfilled by the fleet of aircraft 104. The criteria may specify, for example:
- a number of flying hours that the fleet of aircraft 104 is to complete or be available to complete within a given time period (e.g. one week, or one month);
- one or more flying profiles for one or more of the aircraft 104 that that/those aircraft 104 is/are to complete or be available to complete within a given time period (e.g. one week, or one month);
- a number of sorties that the fleet of aircraft 104 is to complete or be available to complete within a given time period (e.g. per day, per week, or per month);
- a proportion of a given time period in which one or more of the aircraft 104 are to fly or be available to fly (e.g. a number of flying days per month); and
- that one or more aircraft have enough available flying hours (and/or other properties) to complete a given task (e.g. that enough of the aircraft 104 have enough available flying hours to enable a training task to be completed).

At step s4, the demand issuers 130 send the issued demands to the fleet management system 102.

At step s6, the fleet management system 102 stores the received demands in the demands database 202.

At step s8, the fleet management system 102 acquires aircraft data from the aircraft operators 108. For example, the aircraft operators 108 may download some or all of the aircraft data from the aircraft 104, and upload that aircraft data to the fleet management system 102. In some embodiments, some or all of the aircraft data is acquired by the fleet management system 102 from a different source instead of or in addition to the aircraft operators 108, for example, some aircraft data may be acquired from the maintenance personnel 118.

Aircraft data may for example include, but is not limited to:
- a value for the current flying hours of one or more of the aircraft 104;
- a current location of one or more of the aircraft 104;
- an out-of-service date of one or more of the aircraft 104;
- fatigue data for one or more of the aircraft 104;
- age data for one or more of the aircraft 104; and
- "fleet condition" data.

At step s10, the fleet management system 102 stores the acquired aircraft data in the aircraft data database 204.

At step s12, the fleet management system 102 acquires maintenance data from the maintenance personnel 118. For example, the maintenance personnel 118 may upload maintenance data to the fleet management system 102. In some embodiments, some or all of the maintenance data is acquired by the fleet management system 102 from a different source instead of or in addition to the aircraft operators 108, for example, some maintenance data may be acquired from the aircraft operators 108.

Maintenance data may for example include, but is not limited to:
- a maintenance history of one or more of the aircraft 104;
- details of a next scheduled maintenance event for one or more of the aircraft 104;
- modification data for one or more of the aircraft 104; and
- life-limited parts data for one or more of the aircraft 104.

At step s14, the fleet management system 102 stores the acquired maintenance data in the maintenance data database 206.

At step s16, using some or all of the stored demands, the stored aircraft data, and the stored maintenance data, the fleet plan generation module 212 generates a fleet plan for the fleet of aircraft 104.

What will now be described with respect to Figure 4 are further details of an example fleet plan generated by the fleet plan generation module 212 at step s16. Steps s18 to s38 of the process of Figure 3 will be described in more detail later below after the description of Figure 4.

Figure 4 is a schematic illustration (not to scale) of a fleet plan 400 determined by the fleet plan generation module 212.

In this embodiment, the fleet plan 400 comprises, for each of the aircraft 104, a schedule 402 for that aircraft 104 over a time period 404.

The time period 404 may be any appropriate time period, for example, a predefined time period (e.g. 1 year, 5 years, 10 years, etc.), a life of one or more of the aircraft 104 (e.g. a maximum of the aircraft lives), a time period specified by the demand issuers 130, or a life of a service contract between the owners/operators of the aircraft 104 (e.g. the demand issuers 130) and the operators/owners of the fleet management system 102).

The time period 404 has a start time/date 406 and an end time/date 408. The start time/date 406 may be any appropriate time/date, for example the current time/date or a future time/date specified by the demand issuers 130. The end time/date 408 is a time/date that occurs a length of time equal to the time period 404 after the start time/date 406.

In some embodiments, the time period 404 is determined by the fleet management system 102. For example, in response to a request or instruction, and given a set of operating conditions, the fleet management service 102 may determine a time to a schedule out of service date.

The time period 404 is partitioned into a plurality of sub-periods 410. The sub-periods 410 may be any appropriate lengths of time, for example, 1 week, 1 day, etc. The sub-periods 410 may be labelled with corresponding identifying dates/times.

In this embodiment, the schedules 402 for each of the aircraft 104 includes one or more activities that are to be performed by that aircraft 104.

In this embodiment, the activities included in the schedules 402 include:
- "flying activities" which are indicated in Figure 4 by blank boxes and the reference numeral 412. In this embodiment, an aircraft 104 performing a flying activity 412 is either flying or is available to fly. Additional information may be assigned to one or more of the flying activities 412. For example, for a flying activity 412, the fleet plan 400 may specify a predicted number of flying hours accumulated by an aircraft 104 during that flying activity 412. These predicted flying hours may be specified for each of the sub-periods 410 covered by that flying activity 412. Also for example, for a flying activity 412, the fleet plan 400 may specify permitted and/or prohibited operations for an aircraft 104 during that flying activity 412, e.g., a maximum number of flying hours may be specified for an aircraft 104 for a flying activity 412.

- "queueing activities" which are indicated in Figure 4 by hatched boxes and the reference numeral 414. In this embodiment, an aircraft 104 performing a queueing activity 414 is either travelling between the operations centre 106 and the maintenance facility 112 to undergo maintenance, or is in a queue of aircraft 104 waiting to undergo a maintenance operation. Additional information may be assigned to one or more of the queueing activities 414. For example, for a queueing activity 414, the fleet plan 400 may specify a location for an aircraft 104 carrying out that queueing activity 414. An aircraft 104 undergoing a queueing activity 414 is typically not available to perform flying activities 412 until the corresponding maintenance operation has been completed.
- "maintenance activities" which are indicated in Figure 4 by cross-hatched boxes and the reference numeral 416. In this embodiment, an aircraft 104 performing a maintenance activity 416 is undergoing maintenance e.g. at the maintenance facility 112. Additional information may be assigned to one or more of the maintenance activities 416. For example, for a maintenance activity 416, the fleet plan 400 may specify a type of maintenance being performed, and a location for the aircraft 104 undergoing the maintenance. An aircraft 104 undergoing a maintenance activity 416 is typically not available to perform flying activities 412 until the maintenance operation has been completed.
- "withdrawn from service activities" which are indicated in Figure 4 by solid boxes and the reference numeral 418. In this embodiment, an aircraft 104 may be withdrawn from service when its life has been expended. The withdrawn aircraft 104 is not available to perform flying activities 412. Additional information may be assigned to one or more of the withdrawn from service activities 418.

In other embodiments, there may be one or more different activities instead of or in addition to one or more of the above listed activities 412-418.

For each aircraft 104, the position of an activity 412-418 on the aircraft schedule 402 for that aircraft 104 corresponds to the date/time at which that aircraft 104 is to perform that activity 412-418.

In this embodiment, the position of an activity 412-418 on an aircraft schedule 402 is determined by the fleet plan generation module 212 using the available data. For example, the fleet plan generation module 212 may determine that, after a certain number of flying hours have been completed, an aircraft 104 must undergo a particular maintenance activity 416. The fleet plan generation module 212 may position that maintenance activity 416 in the schedule 402 of that aircraft 104 at a position corresponding to a time/date at which that aircraft 104 will have completed less than or equal to the certain number of flying hours.

Also, the length of an activity 412-418 on an aircraft schedule 402 is determined by the fleet plan generation module 212 using the available data. For example, the fleet plan generation module 212 may determine that a certain maintenance activity 416 takes 2 weeks to perform, which may then be specified in schedule 402 of the aircraft 104 by a maintenance activity 416 of corresponding length.

In this embodiment, the fleet plan generation module 212 generates the fleet plan 400 using the stored aircraft and maintenance data such that the demands stored in the demands database 202 are satisfied. In some embodiments, an optimisation algorithm is used by the fleet plan generation module 212 to determine the fleet plan 400 so as to best satisfy the demands. In some embodiments, it is permitted that some of the demands are not satisfied.

In some embodiments where it is not possible to satisfy all of the demands, the fleet plan generation module 212 may determine a fleet plan 400 that satisfies a maximum number of demands, or a prioritised list of demands. In some embodiments, multiple fleet plans may be determined which may then be selected between, for example, by the user 216 or the demands issuers 130.

Thus, an example fleet plan 400 is provided.

Advantageously, the fleet plan 400 may be used to assess the impact of specific "lifed" component maintenance (i.e. maintenance of a component having a specific design life). An individual aircraft component, assembly, or sub-assembly may be identified, and its impact on the fleet plan 400 may be assessed in conjunction with the aircraft planned maintenance. This may be performed to facilitate optimisation of the fleet plan 400.

In some embodiments, an optimum fleet plan 400 is determined by running multiple scenarios, each specifying a respective set of criteria. These criteria may include, but are not limited to, a constraint on the number of available maintenance bays, a constraint of the availability of maintenance personnel, a constraint on working hours etc.

In some embodiments, the fleet plan 400 is determined to include an assumed level of unplanned maintenance. Such unscheduled maintenance may include, but is not limited to, a modification or upgrade event performed on one or more aircraft 104.

Returning now to the description of Figure 3, at step s18, the fleet management system 102 displays the fleet plan 400 to the user 216 on the user interface 210.

At step s20, using the fleet plan 400 and some or all of the data stored in the databases 202-208, the maintenance plan generation module 214 generates a maintenance plan for the fleet of aircraft 104.

What will now be described with respect to Figure 5 is further details of an example maintenance plan generated by the maintenance plan generation module 214 at step s20. Steps s22 to s38 of the process of Figure 3 will be described in more detail later below after the description of Figure 5.

Figure 5 is a schematic illustration (not to scale) of a maintenance plan 500 determined by the maintenance plan generation module 214.

In this embodiment, the maintenance plan 500 comprises, for each of the maintenance bays 114, a schedule 502 for that maintenance bay 114 over a time period 504.

The time period 504 may be any appropriate time period, for example, a predefined time period, a life of the maintenance facility 112, or the time period 404 over which the fleet plan 400 is specified.

The time period 504 has a start time/date 506 and an end time/date 508. The start date 506 may be any appropriate date, for example the current time/date or a time/date at which the first maintenance activity 416 of the fleet plan 400 is due to start. The end time/date 508 is a time/date that occurs a length of time equal to the time period 504 after the start time/date 506.

The time period 504 is partitioned into a plurality of sub-periods 510. The sub-periods 510 may be any appropriate lengths of time, for example, 1 day, 1 hour, etc. The sub-periods 510 may be labelled with corresponding dates/times.

In this embodiment, the schedules 502 for each of the maintenance bays 114 includes one or more activities that are to be performed by that maintenance bay 114.

In this embodiment, the activities included in the schedules 502 are:
- "not-in-use activities" which are indicated in Figure 5 by blank boxes and the reference numeral 512. In this embodiment, a maintenance bay 114 is not-in-use if that maintenance bay 114 is not being used to house an aircraft 104. Additional information may be assigned to one or more of the not-in-use activities 512.
- "in-use activities" which are indicated in Figure 5 by hatched boxes and the reference numeral 514. In this embodiment, a maintenance bay 114 is in-use if an aircraft 104 is housed in that maintenance bay 114 for maintenance. Additional information may be assigned to one or more of the in-use activities 514. For example, for an in-use activity 514, the maintenance plan 500 may specify a type of maintenance being performed, the aircraft 104 upon which maintenance is being performed, a list of maintenance personnel 118 and/or a number of maintenance personnel that will be carrying out the maintenance, a list of equipment (e.g. specialised tools, repair parts, etc.) expected to be used to perform the maintenance, etc.

In other embodiments, there may be one or more different activities instead of or in addition to one or more of the above listed activities 512, 514. For example, in some embodiments, the maintenance plan 500 also includes maintenance activities that occur without the need for a specific maintenance bay 114 to be allocated, for example a flight test. Such maintenance activities may mean that maintenance is being performed on an aircraft, but that a maintenance bay 114 is available to be reallocated for a different purpose.

For each maintenance bay 114, the position of an activity 512, 514 on the bay schedule 502 for that maintenance bay 114 corresponds to the date/time at which that maintenance bay 114 is to perform that activity 512, 514.

In this embodiment, the position of an activity 512, 514 on a bay schedule 502 is determined by the maintenance plan generation module 214 using the available data. For example, the maintenance plan generation module 214 may determine (e.g. based on the fleet plan 400) a time that an aircraft 104 requiring maintenance may arrive at the maintenance facility 112. The maintenance plan generation module 214 may position a corresponding in-use activity in the schedule 502 of a free maintenance bay 114 at the next time at which the necessary maintenance personnel 118 and equipment are available.

Also, the length of an activity 512, 514 on a bay schedule 502 is determined by the maintenance plan generation module 214 using the available data. For example, the maintenance plan generation module 214 may determine that a certain maintenance activity takes 2 weeks to perform (e.g. based on the number of available maintenance personnel 118), which may then be specified in the bay schedule 502 of a maintenance bay 114 by an in-use activity 514 of corresponding length.

In this embodiment, the maintenance plan generation module 214 generates the maintenance plan 500 using the stored aircraft and maintenance data such that the demands stored in the demands database 202 are satisfied. In some embodiments, an optimisation algorithm is used by the maintenance plan generation module 214 to determine the maintenance plan 500 so as to best satisfy the demands. In some embodiments, data relating to the maintenance personnel 118 (e.g. contracted working hours, booked holidays, etc.) and/or the equipment stored in the equipment store 122 is used by the maintenance plan generation module 214 to determine the maintenance plan 500.

In some embodiment where it is not possible to satisfy all of the demands, the maintenance plan generation module 214 may determine a maintenance plan 500 that satisfies a maximum number of demands, or a prioritised list of demands. In some embodiments, multiple maintenance plans may be determined which may then be selected between, for example, by the user 216 or the demands issuers 130.

Thus, an example maintenance plan 500 is provided.

In some embodiments, the maintenance plan generation module 214 determines and/or uses a volume of work associated with a maintenance activity, and a number, skill level, and/or performance level of maintenance personnel for performing that maintenance activity. This information may be specified in the maintenance plan 500.

In some embodiments, the maintenance plan 500 is determined to include an assumed level of unplanned maintenance, which may be estimated from historical data.

In some embodiments, the maintenance plan 500 may be used to generate task lists for maintenance personnel to implement in order to perform the specified maintenance activities. A generated task list may specify an optimised sequence for multiple maintenance tasks, which may be determined by the maintenance plan generation module 214.

In some embodiments, the maintenance plan 500 may be used to provide instruction and/or record storage to the maintenance personnel.

Returning now to the description of Figure 3, at step s22, the fleet management system 102 displays the maintenance plan 500 to the user 216 on the user interface 210.

At step s24, the processor 200 determines a list of equipment that is to be used during the maintenance plan 500. For example, the processor 200 may determine a list of specialised tools and repair parts needed to implement the maintenance plan 500.

At step s26, the processor 200 determines an equipment shortfall, i.e. list of equipment needed to implement the maintenance plan 500 that is not currently possessed by the maintenance facility. This equipment shortfall is equipment that is to be supplied by the suppliers 124 to the maintenance facility 112 in order to enable the maintenance facility 112 to implement the current maintenance plan 500.

In some embodiments, the processor 200 compares the list of equipment determined at step s24 with the current inventory stored in the inventory database 208 to identify equipment needed to implement the maintenance plan 500 that is not currently stored in the equipment store 122.

In other embodiments, the equipment shortfall may be determined in a different way, for example, in some embodiments, the inventory is assumed to be empty and the equipment shortfall is determined to be all equipment needed to implement the maintenance plan 500. In some embodiments, the processor 200 includes in the determined equipment shortfall additional extra equipment above that needed to implement the maintenance plan 500, for example, to account for loss or breakages of equipment.

The equipment shortfall may be provided to the user 216, e.g. by displaying the equipment shortfall on the user interface 210.

At step s28, the user 216 (or other appropriate party) reviews the current fleet plan 400, the maintenance plan 500, and the equipment shortfall.

The user 216 and/or the processor 200 may modify the fleet plan 400, the maintenance plan 500, and the equipment shortfall, for example, in response to new information becoming available (e.g., new demands issued by the demand issuers 130, an updated inventory etc.).

At step s30, the user 216 (or other appropriate party) negotiates with the suppliers 124 to generate a procurement plan for procuring the equipment specified in the current equipment shortfall. In this embodiment, the procurement plan includes costs and delivery times for the equipment specified in the current equipment shortfall. The user 216 may communicate with the suppliers 124 using the fleet management module 102 via the fourth communications link 128.

In this embodiment, the equipment specified in the current equipment shortfall includes equipment that is expected to be used during the maintenance of the entire fleet of aircraft 104 over the entire time period 404 that is of interest to the demand issuers 130, for example, over the lifetimes of the aircraft 104. This advantageously tends to facilitate the user 216 negotiating a lower price for supply of the equipment with the supplier 124. For example, the suppliers 124 may agree to a lower per unit price for a certain repair part when those repair parts are purchased in bulk as opposed to, for example, if those repair parts were purchased from the supplier 124 on an ad hoc basis.

Preferably, the user 216 negotiates with the suppliers 124 such that the procurement plan includes the lowest mutually agreeable price for the suppliers 124 to supply the equipment specified in the current equipment shortfall to the maintenance facility 112.

Preferably, the user 216 negotiates with the suppliers 124 such that the procurement plan includes the suppliers 124 to provide "just-in-time" delivery of the equipment specified in the current equipment shortfall in order to maintain part inventories at optimum levels. Times/dates at which equipment is to be delivered to the maintenance facility may be specified in the maintenance plan 500.

At step s32, the user 216 (or other appropriate party) and/or the processor 200 determines a total cost of implementing the fleet plan 400 and the maintenance plan 500. In this embodiment, determining this total cost may include using the procurement plan costs, labour costs, transport costs, overhead costs, profit, etc. Also, this total cost may be in the form of a payment plan in which costs are distributed over a period of time.

At step s34, the user 216 (or other appropriate party) presents the fleet plan 400 and the maintenance plan 500, and the total cost of implementing these plans 400, 500 to the demand issuers 130.

At step s36, the demand issuers 130 either approve or reject the fleet plan 400, the maintenance plan 500, and/or the total cost presented to them.

If at step s36, the demand issuers 130 reject the fleet plan 400, the maintenance plan 500, and/or the total implementation costs, the method returns to step s28 where the user 216 (or other appropriate party) may review and adjust the fleet plan 400 and/or the maintenance plan 500. The user 216 (or other appropriate party) may also adjust the equipment specified in the equipment shortfall. Also, the user 216 (or other appropriate party) may flag some or all of the equipment in the equipment shortfall as having to have its procurement cost renegotiated (e.g. to reduce its cost) when the method proceeds to step s30.

In some embodiments, if the fleet plan 400, the maintenance plan 500, and/or the total cost are rejected by the demand issuers 130, the demand issuers 130 modify one or more of their demands. Modified demands may be communicated to the fleet management module 102 and stored in the demands database 202. The plan generation modules 212, 214 may use the modified demands to adjust the fleet plan 400 and/or the maintenance plan 500, which may lead to an updated equipment shortfall.

In some embodiments, if the fleet plan 400, the maintenance plan 500, and/or the total cost are rejected by the demand issuers 130, the user 216 (or other appropriate party) and/or the processor 200 may modify one or more of the demands stored in the demands database 202. The modified demands may be used to modify the fleet plan 400 and/or the maintenance plan 500 and/or the implementation costs, which may then be presented to the demands issuer 130 along with the corresponding set of modified demands. The demands issuer 130 may then decide to approve or reject the presented modified plans 400, 500, costs, and demands. For example, the user 216 may reduce the number of flying hours achievable by the fleet of aircraft 104 in a given time period, which may yield updated fleet and maintenance plans 400, 500 deliverable at a lower total cost.

In some embodiments, if the fleet plan 400 and the maintenance plan 500 are acceptable to the demand issuers 130, but the total cost is not acceptable, the fleet plan 400 and the maintenance plan 500 are not adjusted, and the user 216 will attempt to negotiate a revised procurement plan with the suppliers 124 that will be mutually acceptable to the suppliers 124 and the demand issuers 130.

However, if at step s36, the demand issuers 130 approve the fleet plan 400, the maintenance plan 500, and/or the total implementation costs, the method proceeds to step s38.

At step s38, the approved fleet plan 400 and maintenance plan 500 are implemented. Thus, in this embodiment, the fleet plan 400 is realised such that the current set of demands issued by the demand issuers 130 is met during the time period 404. Also, the maintenance plan 500 is realised such that the aircraft 104 undergoes maintenance as specified during the time period 504.In this embodiment, the demand issuers 130 are invoiced based on the approved total cost, e.g. by the maintenance service provider, in accordance with any payment plan that has been determined and agreed upon (and taking into account any cost reductions or increases specified in any agreements between the maintenance service provider and the demand issuers 130). Thus, the maintenance service provider receives a fee based on the total cost. Also, the suppliers 124 are paid (e.g. by the maintenance service provider), in accordance with the agreed upon procurement plan, for supplying equipment to the maintenance facility 112.

Thus a method in which the fleet management system 102 centrally manages operations and the maintenance of the fleet of aircraft 104 is provided.

What will now be described is a method of generating an economic model performed by the economic model module 215.

Figure 6 is a process flow chart showing certain steps of a process performed by the economic model module 215. In some embodiments, the process of Figure 6 is performed at least partially in parallel with certain steps of the process of Figure 3.

At step s40, the economic model module 215 acquires the fleet plan 400 generated by the fleet plan generation module 212 at step s16. In some embodiments, the economic model module 215 uses some, not all, of the information specified in the fleet plan 400 to generate the economic model. In some embodiments, the economic model module 215 is configured to self-generate some or all of the information specified in the fleet plan 400 (at a high level).

At step s42, the economic model module 215 acquires the maintenance plan 500 generated by the maintenance plan generation module 214 at step s20. In some embodiments, the economic model module 215 uses some, not all, of the information specified in the maintenance plan 500 to generate the economic model. In some embodiments, the economic model module 215 is configured to self-generate some or all of the information specified in the fleet plan 400 (at a high level).

Advantageously, the economic model module 215 self-generating fleet plan information and/or maintenance plan information tends to allow the economic model module 215 to run rapid scenario analysis tasks to determine impact over several options.

At step s44, the economic model module 215 determines the volumes (i.e. amounts) of one or more resources that are to be used in the acquired fleet plan 400 and maintenance plan 500.

In this embodiment, the resources include equipment and labour. For example, the volume of repair parts used in the maintenance plan 500 may be determined, also the total number of man-hours for implementing the fleet plan 400 and the maintenance plan 500 may be determined. In other embodiments, one or more different resources may be determined instead of or in addition to the volumes equipment and labour.

The resources and any relationships there between may be specified in the economic model 217.

At step s46, using the determined resource volumes, the economic model module 215 determines the total cost of each resource. For example, the total cost of repair parts used in the maintenance plan 500 may be determined, also the total cost of the man-hours for implementing the fleet plan 400 and the maintenance plan 500 may be determined.

The costs for the resources may be calculated using, for example, prices for equipment agreed upon with the suppliers 124, and salaries of the trained personnel 108, 118.

Costs for some or all of the resources may be specified in the economic model 217.

At step s48, the economic model module 215 acquires one or more performance metrics for assessing the performance of the management of the operations of a fleet of aircraft 104 and the maintenance of that fleet of aircraft 104.

In this embodiment, the performance metrics are metrics that impact the revenue received by the supplier of the management services, and may include, but are not limited to, penalties for not satisfying certain contractual obligations. For example, the performance metrics may specify a financial penalty for not delivering a certain aircraft availability specified in the demands of the demand issuers 130. In some embodiments, the performance metrics may include measures of customer satisfaction and the like. The performance metrics may include quantitative means of measuring performance which may include, but are not limited to, contractual measures (Key Performance Indicators, KPIs) and internal business performance measures (Key Value Indicators, KVIs).

In some embodiments, the performance metrics include a measurement of schedule adherence.

In some embodiments, the performance metrics may be specified by the demand issuers 130, for example, in the demands issued by the demand issuers 130 at step s2. In some embodiments, the performance metrics are negotiated and agreed between the demand issuer 130 and the provider of the management services (e.g. user 216 or an employer of the user 216).

Some or all of the performance metrics may be specified in the economic model 217. Relationships between some or all of the performance metrics may be specified in the economic model 217.

At step s50, the economic model module 215 assesses the fleet plan 400 and the maintenance plan 500 against the acquired performance metrics. For example, the economic model module 215 may calculate the amount of any financial penalties incurred as a result of the plans being implemented. Also, the economic model module 215 may determine a likelihood of one or more penalties being imposed upon the management services provider if one or more pre-specified events were to occur (these pre-specified events may be specified by the economic model 217).

In some embodiments, the economic model 217 specifies an algorithm for assessing the fleet plan 400 and/or the maintenance plan 500 against the acquired performance metrics. In some embodiments, the economic model 217 specifies an algorithm for determining risk factors (e.g. likelihood for one or more of the penalties being imposed if one or more pre-specified events were to occur).

At step s52, using the costs determined at step s46 and the assessment of the plans 400, 500 performed at step s50, the economic model module 215 determines an expected revenue for the management services provider for providing the fleet and maintenance plans 400, 500 (i.e. for managing the performance of maintenance on the aircraft 104 in accordance with the plans 400, 500). The expected revenue for managing the aircraft maintenance may be determined using the costs providing the fleet and maintenance plans 400, 500. Determination of the expected revenue may use a payment profile from the customer.

In some embodiments, in determining the expected revenue, the economic model module 215 uses the performance metric information acquired at step s48. The expected revenue may be impacted by contractual penalties dependent upon the performance metrics.

In some embodiments, the economic model 217 specifies an algorithm for determining the expected revenue.

At step s54, the economic model module 215 displays, for example through a range of graphical charting outputs, the expected revenue to the user 216 on the user interface 210. In some embodiments, any determined risk factors may be displayed to the user 216.

In some embodiments, the economic model module 215 also generates and displays further information which may include, but is not limited to, tornado charts to facilitate the identification of Value Drivers, Value Indicators, and Key Value Indicators. The economic model module 215 may further allow for the alteration, e.g. by the user 216, of key inputs or "levers" to determine sensitive points in a project solution.

Thus, a process performed by the economic model module 215 is provided.

It should be noted that certain of the process steps depicted in the flowcharts of Figures 3 and 6 and described above may be omitted or such process steps may be performed in differing order to that presented above and shown in Figures 3 and 6. Furthermore, although all the process steps have, for convenience and ease of understanding, been depicted as discrete temporally-sequential steps, nevertheless some of the process steps may in fact be performed simultaneously or at least overlapping to some extent temporally. Furthermore, although all the processes shown in Figures 3 and 6 and described in more detail above have been, for convenience and ease of understanding, depicted as separate processes, nevertheless the processes of Figures 3 and 6 may be run in parallel, with outputs from one process being used to affect or guide the other. For example, the economic modelling process of Figure 6 may be implemented to provide a rapid modelling capability to guide decision making and to review risks and opportunities within the process of managing operations and maintenance of the fleet of aircraft of Figure 3.

The above described method and apparatus tends to provide advantageously flexible fleet and maintenance management for the fleet of aircraft. For example, the demands that are to be fulfilled may be easily changed, for example, in the event of an emergency requiring increased aircraft availability (e.g. the demand issuer can easily update or delete existing demands, or add new demands). The fleet and maintenance plans, and the costs involved can then be easily updated or recalculated using the above methods, and presented to the demand issuer for approval or rejection. Also, the above described method and apparatus tends to allow for new aircraft, different types of aircraft, and new capabilities to be easily included into fleet and maintenance plans. The fleet and maintenance plans can easily be updated, and the costs recalculated and presented to the demand issuer for approval or rejection. The downstream effect of changes to the demands may be predicted using the above described system and method, and communicated to the demand issuers.

Furthermore, fleet and maintenance plans, and the costs of maintenance etc. can easily be updated in the event of unforeseen events occurring. For example, if an aircraft were to develop an unexpected fault or damage (which may manifest in the aircraft data for that aircraft), or if delivery of a certain repair item fails, fleet and maintenance plans and the associated costs can be easily updated, and the effects of the unforeseen event communicated quickly to the demand issuers. The fleet plan and/or maintenance plan can then be adjusted if desired by the demand issuers to mitigate the effects of the unexpected event. The downstream effect of unforeseen events may be predicted using the above described system and method, and communicated to the demand issuers.

Advantageously, the fleet and maintenance plan generation modules be used to model possible scenarios. Inputs to the plan generation modules may be adjusted to model the effects of certain events on, e.g., fleet availability, personnel workload, etc. For example, the plan generation modules may be used to assess the impact of an unexpected aircraft failure, or the unexpected unavailability of a repair part.

The above described method and apparatus tends to provide for improved inventory management. For example, removal of a repair part from the equipment store by maintenance personnel can be automatically electronically communicated to the fleet management module to update the inventory in the inventory database. Thus, an up-to-date and accurate inventory is maintained. Thus, a need for stock-taking tends to be reduced. Also, the fleet management module can automatically check the inventory against the fleet and maintenance plans to identify shortfalls/surpluses of equipment. In the event of a shortfall, the fleet management module may automatically place an order for re-supply with the suppliers. In the event of a surplus, the fleet management module may automatically arrange for redistribution of the stock, for example to a different maintenance facility that will use the surplus. Similar processes can be performed in the distribution of maintenance personnel across multiple different maintenance facilities. Thus, the above described method and apparatus advantageously tends to facilitate balancing and pooling of equipment and man power across multiple different maintenance locations.

Conventionally, service disruptions are prevented or reduced by large parts inventories and by premature replacement of systems, subsystems and component parts. These remedies may be sub-optimum because inventories consume capital, risk obsolescence, and because premature maintenance and component replacement under-utilizes assets. The above described method and apparatus tends to overcome these problems.

In the above method, equipment is purchased from the suppliers based on forecasted consumption, for example, over the life of an aircraft or service contract. This tends to facilitate the negotiation of lower per unit prices for the equipment. Furthermore, fewer parts tend to be written off due to obsolescence. Thus, the costs to the demand issuers tend to be reduced.

The above described method and apparatus tends to useable to efficiently scale the supply of equipment, maintenance personnel, and the maintenance facility. For example, above described method and apparatus may be used to ensure that the correct equipment and an appropriate number of maintenance personnel are in place for scheduled aircraft maintenance events. This tends to reduce surpluses in equipment and man-power thereby reducing costs. Also, the above described method and apparatus may be used to ensure that the maintenance facility is an appropriate size, i.e. includes an appropriate number of maintenance personnel and appropriate capabilities to perform the scheduled aircraft maintenance events.

The above described method and apparatus tends to provide for maximised or improved air readiness for the fleet of aircraft with respect to maintenance and demand criteria. Advantageously, a risk that the demands of the demand issuers are not fulfilled tends to be minimised.

The above described method and apparatus may be used to identify "weak links" or sources of failure in environment, which may then be improved.

The above described process performed by the economic model module advantageously provides the management service provider with a prediction of expected revenue. A net present value (NPV) may also be determined. Expected revenues and/or NPV amounts may be used to facilitate the management service provider making commercial decisions. Also, such information may be used by the management service provider to propose certain changes to the demand issuer, for example, contractual changes, changes to the performance metrics used to assess the management operations, and/or changes to the fleet to the fleet plan and/or maintenance plan that would result in cost savings to the demand issuer and/or the management service provider.

Advantageously, the economic model module may be implemented to model possible scenarios. Inputs to the economic model module may be adjusted to model the effects of certain events on the revenue received by the management service provider. For example, the management service provider can assess the impact of delaying a certain maintenance operation (e.g. caused by failure of an equipment delivery or unavailability of appropriate personnel) on their revenue by adjusting the maintenance plan used by the economic model module to determine the revenue. Also, inputs to the economic model module may be adjusted to identify cost-saving changes to the proposed services, for example that may increase or maximise the revenue of the management service provider. Such changes may then be proposed to the demand issuer and negotiated.

In the above embodiments, the inputs to the economic model module include the determined fleet and maintenance plans. However, in other embodiments, simplified versions of the fleet and/or maintenance plans may be generated and used as inputs to the economic model module. Using high-level simplified plans as inputs tends to reduce the computational cost of estimating the expected revenue.

The economic model is advantageously updateable and may be modified to include new information such as contractual changes between the demand issuers and the management service provider.

The economic model module advantageously tends to provide a forward looking capability to analyse and anticipate operational impact on operating costs and revenue generation (e.g. in terms of Net Present Value impact).

The economic model module advantageously tends to facilitate exploration of the underlying dynamics of cost/performance and is supported by operational and business assumptions, estimations, and calculations, which may be in the form of outputs from other modelling activities, such as fleet management modelling, planning simulations, and supply chain modelling.

The economic model module advantageously tends to support decision-making processes and inform risk and opportunity identification. For example, various fleet operating scenarios can be rapidly analysed to quantify the impact and help decision makers develop solutions and/or determine future actions.

Although the fleet management system has been described with respect to certain exemplary embodiments, it is to be understood that the specific embodiments are for purposes of illustration and not limitation, as other variations will occur to those of skill in the art.

For example, in the above embodiments, the fleet management system and method is implemented to centrally manage operations and the maintenance of a fleet of aircraft. However, in other embodiments, the fleet management system and method is implemented to centrally manage operations and/or the maintenance of a different type of vehicle (e.g. land-based vehicles), or multiple different types of vehicle (e.g. a combination of land-based vehicles and aircraft). Also, in the above embodiments, the aircraft are manned, military aircraft. However, in other embodiments, the vehicles may be different to manned, military aircraft, for example, the vehicles may be unmanned and/or civil.

Also for example, in the above embodiments, the fleet of aircraft is located at a single operations centre. However, in other embodiments, the fleet may be distributed across multiple different operations centres.

Also for example, in the above embodiments, maintenance of the aircraft is performed at a single maintenance facility. However, in other embodiments, maintenance operations may be distributed across multiple different maintenance facilities, each of which may include one or more respective equipment stores. Separate inventories for each equipment store may be kept and managed by the central fleet management system.

## Claims

1. A method for performance by a fleet management system in the management of the performance of maintenance on a fleet of vehicles, the method comprising:
providing an initial fleet plan, the initial fleet plan specifying vehicle availability over a future time period and including, for each vehicle, a schedule of the maintenance operations for that vehicle, wherein the initial fleet plan is dependent upon one or more criteria specifying vehicle availability for one or more predetermined time periods in the future time period, and the initial fleet plan is dependent upon vehicle maintenance data;
acquiring update information, the update information including data selected from the group of data consisting of one or more further criteria to be fulfilled by the fleet of vehicles and further vehicle maintenance data, the one or more further criteria specifying vehicle availability for one or more predetermined time periods within the future time period, the one or more further criteria being different to the one or more criteria, the further vehicle maintenance data being different to the vehicle maintenance data; and
updating the initial fleet plan, using the update information, to produce an updated fleet plan, the updated fleet plan specifying updated vehicle availability over the future time period and including, for each vehicle, an updated schedule of maintenance operations for that vehicle.

2. A method according to claim 1, wherein the step of providing the initial fleet plan comprises:
acquiring the one or more criteria specifying vehicle availability for one or more predetermined time periods;
acquiring the vehicle maintenance data specifying multiple maintenance operations, each maintenance operation being an operation to be performed on one or more of the vehicles in the fleet; and
determining, based on the one or more criteria, the initial fleet plan, the initial fleet plan including, for each vehicle, a schedule of the maintenance operations for that vehicle.

3. A method according to claim 1 or 2, the method further comprising:
determining, using the updated fleet plan, a maintenance plan for one or more maintenance service providers, the maintenance plan comprising, for each maintenance service provider, a schedule of one or more of the maintenance operations specified in the updated schedules of maintenance operations that are to be performed by that maintenance service provider on a vehicle of the fleet; and
managing the maintenance service providers to perform the maintenance operations on the fleet of vehicles in accordance with the maintenance plan.

4. A method according to claim 3, the method further comprising:
determining, for each maintenance service provider, an equipment list including equipment to support the maintenance operations to be performed by that maintenance service provider; and
providing, to each maintenance service provider, the equipment specified in the equipment list for that maintenance service provider by managing supply of the specified equipment from one or more equipment suppliers to that maintenance service provider.

5. A method according to claim 3 or 4, the method further comprising storing, for each maintenance service provider, an inventory of equipment stored by that maintenance service provider and usable to support the maintenance operations to be performed by that maintenance service provider.

6. A method according to any of claims 1 to 5, wherein the vehicles are aircraft.

7. A method according to any of claims 1 to 7, wherein the one or more criteria and/or further criteria include at least one criterion specifying a number of flying hours that the fleet of aircraft must be available to fly within a predetermined time period.

8. A method according to claim 7 or 8, further comprising determining, based on the updated fleet plan, a projected flight profile for the fleet of aircraft over one or more of the predetermined time periods.

9. A method according to any of claims 1 to 8, wherein at least part of the vehicle maintenance data is acquired from an integrated health monitoring system located on a vehicle in the fleet.

10. A method according to any of claims 1 to 9, wherein:
a management service provider is an owner and/or operator of the fleet management system;
the management of the performance of maintenance on the fleet of vehicles is for a customer of the management service provider;
the customer is an operator and/or owner of the fleet of vehicles;
the management service provider is a separate business entity from the customer;
the management service provider charges and receives a fee from the customer for managing the performance of the maintenance of the vehicles;
the one or more criteria and the one or more criteria are specified by the customer; and
the method further comprises sending, to the customer, by the fleet management system, the updated fleet plan.

11. A method according to claim 10, wherein:
the method further comprises:
determining a cost of managing the performance of the maintenance on the fleet of vehicles based on the determined updated fleet plan; and
providing the determined cost to the customer; and
the performance of the maintenance on a fleet of vehicles is performed responsive to receiving approval of the fleet plan and the cost from the customer.

12. A method according to claim 11 when dependent on claim 4, wherein determining the cost comprises negotiating, with one or more equipment suppliers, a cost for the one or more equipment suppliers to supply the specified equipment to the one or more maintenance service providers.

13. A fleet management system for centrally managing the performance of maintenance on a fleet of vehicles, the fleet management system comprising one or more processors configured to:
acquire an initial fleet plan, the initial fleet plan specifying vehicle availability over a future time period and including, for each vehicle, a schedule of the maintenance operations for that vehicle, wherein the initial fleet plan is dependent upon one or more criteria specifying vehicle availability for one or more predetermined time periods in the future time period, and the initial fleet plan is dependent upon vehicle maintenance data;
acquire update information, the update information including data selected from the group of data consisting of one or more further criteria to be fulfilled by the fleet of vehicles and further vehicle maintenance data, the one or more further criteria specifying vehicle availability for one or more predetermined time periods within the future time period, the one or more further criteria being different to the one or more criteria, the further vehicle maintenance data being different to the vehicle maintenance data; and
update the initial fleet plan, using the update information, to produce an updated fleet plan, the updated fleet plan specifying updated vehicle availability over the future time period and including, for each vehicle, an updated schedule of maintenance operations for that vehicle.

14. A program or plurality of programs arranged such that when executed by a computer system or one or more processors it/they cause the computer system or the one or more processors to operate in accordance with the method of any of claims 1 to 12.

15. A machine readable storage medium storing a program or at least one of the plurality of programs according to claim 14.
